Europäisches Patentamt

**European Patent Office**

**Office européen des brevets**

(19)

(11) Numéro de publication: **0 075 930**

**A2**

(12)

# DEMANDE DE BREVET EUROPEEN

(21) Numéro de dépôt: **82108978.6**

(22) Date de dépôt: **28.09.82**

(51) Int. Cl.³: **C 01 F 5/42**
**C 01 G 53/00**

(30) Priorité: **29.09.81 CA 386906**

(43) Date de publication de la demande:
**06.04.83 Bulletin 83/14**

(84) Etats contractants désignés:
**AT BE CH DE FR GB IT LI LU NL SE**

(71) Demandeur: **GOUVERNEMENT DU QUEBEC**
**200, Chemin Ste-Foy**
**Québec(CA)**

(72) Inventeur: **Gabra, Georges**
**1008 Etienne-Dumetz**
**Cap-Rouge Québec, G0A 1K0(CA)**

(74) Mandataire: **Casalonga, Axel et al,**
**BUREAU D.A. CASALONGA OFFICE JOSSE & PETIT**
**Baaderstrasse 12-14**
**D-8000 München 5(DE)**

(54) **Procédé de récupération du magnésium et/ou du nickel par extraction liquide-liquide.**

(57) Récupération du sulfite de magnésium et/ou du nickel à l'état pur contenus dans une matière de départ solide. Cette dernière est traitée à l'aide de $SO_2$ gazeux dans l'eau, on soumet la solution obtenue à l'extraction liquide-liquide, à la suite de quoi on obtient une phase aqueuse et une phase organique et l'on récupère le sulfite de magnésium et/ou du nickel de la phase aqueuse. Obtention d'un sel de magnésium de grande pureté.

EP 0 075 930 A2

Croydon Printing Company Ltd.

L'invention concerne un procédé de récupération du sulfite de magnésium et/ou du nickel par extraction liquide/liquide.

La réaction de $SO_2$ gazeux en l'absence d'air avec un mélange de magnésium, de fer, de nickel et de calcium sous forme d'oxyde ou de silicate, par exemple les rejets d'amiante, permet de produire du bisulfite de magnésium soluble. Cependant, lors de cette solubilisation du magnésium, les éléments (fer, calcium et nickel) passent aussi en solution. La purification de la solution de bisulfite de magnésium ou la séparation des éléments de valeur à l'état pur comme le nickel, avec les méthodes classiques, est impossible. La précipitation des éléments tels que le fer, le calcium et le nickel de cette solution par $NH_4OH$, $NH_4OH + H_2S$ ou $(NH_4)_2S$ crée des problèmes parce que le sulfite de. magnésium précipite également.

$SO_2$ est produit en grande quantité au cours du smeltage des minerais sulfurés de cuivre, plomb et zinc. De plus, on estime qu'il faut en enlever 20 millions de tonnes par an du charbon et de l'huile combustible pour se conformer aux exigences relatives à la qualité de l'air. La récupération de $SO_2$ n'est pas facile. La transformation en acide sulfurique constitue une solution, pourvu qu'on puisse trouver un marché, ce qui n'est pas toujours le cas. Une autre approche serait d'utiliser directement $SO_2$ pour l'extraction de métaux (magnésium, fer, nickel) contenus dans des masses minéralisées, sous forme de silicates. La serpentine (rejets d'aminàte) est un exemple de silicate de magnésium.

La réaction de $SO_2$ (sans oxygène) avec une pulpe de rejets d'amiante permet de produire du bisulfite de magnésium. Cependant, lors de cette solubilisation du magnésium, les impuretés (fer, calcium, nickel) passent aussi en solution. La précipitation des impuretés de cette solution par $NH_4OH$, $NH_4OH + H_2S$ ou $(NH_4)_2S$ est possible, mais le sulfite de magnésium précipite également. On ne peut donc songer à utiliser cette méthode.

Des essais de purification du magnésium en séparant les éléments indésirables par la méthode classique de précipitation du fer et du nickel sous forme de sulfure en milieu alcalin ne se sont pas montrés satisfaisants à cause de la précipitation simultanée de magnésium sous forme de sulfite.

Bien qu'il soit connu d'effectuer l'extraction liquide-liquide du Ni, $Fe^{2+}$, Ca et Mg, on n'a jamais démontré l'extraction sélective de $Ni^{2+}$, $Fe^{2+}$, et Ca d'une solution acide de magnésium.

La présente invention porte sur la mise en solution du magnésium et des autres éléments, par exemple le fer, le calcium et le nickel, par la réaction de $SO_2$ sans oxygène dans l'eau et sur la séparation du sel de magnésium et/ou du nickel à l'état pur par extraction liquide-liquide.

L'invention concerne un procédé de récupération du sulfite de magnésium et/ou du nickel à l'état pur contenus dans une matière de départ solide, caractérisé en ce qu'on traite celle-ci à l'aide de $SO_2$ gazeux dans l'eau et on soumet la solution obtenue à l'extraction liquide-liquide, à la suite de quoi on obtient une phase aqueuse et une phase organique, et l'on récupère le sulfite de magnésium et/ou du nickel de la phase aqueuse.

De préférence, le procédé consiste en une extraction liquide-liquide d'une solution acide du mélange de bisulfite de magnésium, de fer, de calcium et de nickel par une phase organique qui contient un mélange de Di(2 éthyl hexyl acide phosphorique), Di(2EHPA), de Kelex 100 (marque déposée) et d'un diluant comme le kérosène. Les rapports entre les trois composants varient de préférence de 10:10:80 à 5:1:94 respectivement en volume. On a trouvé que le meilleur rapport est de 5:1:94 ou 5:2:93, dépendant de la concentration de nickel en solution.

Le Di(2EHPA) est spécifique pour le fer et le calcium. Il n'a aucune influence sur le nickel. Le Kelex 100 est spécifique pour le nickel mais il extrait légèrement le fer et le calcium. A pH inférieur à 2, l'extraction du nickel est négligeable. A pH 4 cette extraction est optimale. le pH optimal pour l'extraction du fer, du nickel et du calcium est de 3-4.

La perte en magnésium est proportionnelle à sa concentration dans la solution originale. Elle varie de 2 à 6% en faisant varier la concentration de magnésium de 47 à 75 g/l.

En général, il suffit de 3 étapes de contact pour séparer le fer, le calcium et le nickel du magnésium.

La régénération de la phase organique après l'étape de l'extraction liquide-liquide est faite en utilisant soit l'acide sulfureux ou l'acide sulfurique 1-4 N. La récupération du nickel de la phase aqueuse provenant de la régénération de la phase organique (stripping) est possible avec les méthodes chimiques bien connues.

L'invention va maintenant être illustrée sans caractère limitatif par les exemples qui suivent :

Exemple 1 :

On met en contact en 3 fois 100 ml d'une solution mère, (solution A) contenant MgO 46,9 g/l, CaO 150 ppm, $Fe_{tot}$ 4,2 g/l, NiO 250 ppm et $SiO_2$ 160 ppm, avec 100 ml de phase organique, qui est composée de 5% Di(2EHPA), 2% Kelex 100 et 93% kérosène. L'analyse de la phase aqueuse après les 3 contacts révèle qu'elle renferme MgO 45,8 g/l, CaO 4 ppm, NiO 10 ppm, $Fe_{tot}$ 4 ppm et $SiO_2$ 140 ppm. La solution aqueuse est chauffée à 70°C 30 minutes pour précipiter le sulfite de magnésium. Celui-ci est séché pendant 12 heures à 100°C.

Les résultats de l'analyse chimique sont les suivants : MgO 28-32%, $Fe_{tot}$ 0,04%, NiO 0,04%, CaO < 0,01%, $SiO_2$ <0,1% ($MgSO_3$ $xH_2O$, x = 1 ou 2)

L'analyse chimique du sulfite de magnésium sans l'extraction liquide-liquide est :
MgO 28%, $Fe_{tot}$ 2,6%, NiO 0,24%, CaO 0,12% et $SiO_2$ < 0,1%.

Exemple 2 :

On met en contact en 3 fois 100 ml d'une solution (solution B), contenant MgO 75 g/l, CaO 160 ppm, $Fe_{tot}$ 1,6 g/l, NiO 193 ppm et $SiO_2$ 640 ppm, avec 100 ml de phase organique composée de 5% Di(EHPA), 1% Kelex 100 et 94% kérosène.

L'analyse de la phase aqueuse après les 3 contacts est la suivante :

MgO 70 g/1, NiO 4,8 ppm, CaO 2 ppm, $Fe_{tot}$ 4 ppm et $SiO_2$ 600 ppm

La solution aqueuse est chauffée à 70°C pendant 30 minutes pour précipiter le sulfite de magnésium. Ce sel est séché à 100°C pendant 12 heures. L'analyse chimique de ce dernier est :

MgO 32%, $Fe_{tot}$ 0,04%, NiO 0,04%, CaO 0,01% et $SiO_2$ 0,1%
($MgSO_3 \cdot xH_2O$, x = 1)

L'analyse chimique du sulfite de magnésium sans le traitement liquide-liquide est :

MgO 27,1%, $Fe_{tot}$ 2,1%, NiO 0,20%, CaO 0,2% et $SiO_2$ 0,1%

Ce procédé permet de préparer du sulfite de magnésium ayant une pureté de 95,5%

<u>Influence de la variation de la proprotion de Di(2EHPA) et Kelex 100 sur la concentration des impuretés dans le sulfite de magnésium</u>

Deux séries d'expérience ont été effectuées en utilisant différentes proportions de Di(2EHPA) et Kelex dans le kérosène pour les deux solutions de lixiviation, soit la solution (A) et la solution (B).

Dans cette série d'expérience, on a gardé le nombre de contacts et le rapport de la pahse aqueuse/phase organique constante, soit 3 contacts et O/A = 1. La solution aqueuse a été chauffée à 70°C pendant 30 minutes pour précipiter le sulfite de magnésium. Les résultats de cette étude sont montrés dans les tableaux 1 et 2.

Tableau 1

L'influence de la variation de la proportion de Di(2EHPA): Kelex 100 : kérosène sur la concentration des impuretés dans le sulfite de magnésium de la solution (A)

| Rapport de Di(2EHPA): Kelex 100: kérosène Volume | Analyse chimique du sulfite de magnésium (%) | | | | | | | | | | Couleur | Pureté MgO % * |
|---|---|---|---|---|---|---|---|---|---|---|---|---|
| | MgO | $Fe_{tot}$ | NiO | CaO | $Al_2O_3$ | Cu | $SiO_2$ | $Cr_2O_3$ | $SO_3{}^{--}$ | $H_2O_{tot}$ | | |
| (originale) 0:0:0 | 26 | 2,63 | 0,24 | 0,12 | - | - | <0,1 | 0,04 | - | - | brun | 87 |
| 10:0:90 | 32 | <0,04 | 0,27 | <0,01 | <0,01 | <0,01 | <0,1 | 0,04 | - | - | blanc | 98,4 |
| 0:10:90 | 27,8 | 2,1 | 0,02 | 0,1 | <0,02 | <0,01 | <0,1 | 0,04 | - | - | jaune | 90,2 |
| 10:1:89 | 30,1 | 0,04 à 0,06 | 0,06 | <0,01 | - | - | <0,1 | 0,04 | 53,5 | 26 | blanc | 99,1 |
| 5:1:94 | 30,3 | 0,04 | 0,06 | <0,01 | - | - | <0,1 | 0,04 | 52,5 | 28 | blanc | 99,1 |
| 5:2:93 | 30,1 | 0,04 | 0,04 | <0,01 | - | - | <0,1 | - | 52,8 | 29,1 | blanc | 99,2 |
| 5:5:90 | 30,2 | 0,04 | 0,02 | <0,01 | <0,02 | - | <0,1 | 0,04 | 50,8 | 30,9 | jaune (pâle) | 99,3 |
| 10:10:80 | 29,9 | 0,01 à 0,02 | 0,01 | <0,01 | <0,01 | - | <0,1 | 0,04 | 53,5 | 32,1 | jaune | 99,4 |

$$*\text{Pureté MgO \%} = \frac{MgO \%}{(MgO + FeO + NiO + CaO + Al_2O_3 + Cu + SiO_2 + Cr_2O_3) \%} \times 100$$

## Tableau 2

L'influence de la variation de la proportion de Di(2EHPA): Kelex 100: kérosène sur la concentration des impuretés dans le sulfite de magnésium de la solution (B)

| Rapport de Di(2EHPA) Kelex 100: kérosène | Analyse chimique du sulfite de magnésium (%) | | | | | | | | | | | |
|---|---|---|---|---|---|---|---|---|---|---|---|---|
| | $MgO$ | $Fe_{tot}$ | NiO | CaO | $Al_2O_3$ | Cu | $SiO_2$ | $Cr_2O_3$ | $SO_3$-- | $H_2O_{tot}$ | Couleur | Pureté MgO % * |
| (originale) 0:0:0 | 27,1 | 2,1 | 0,2 | 0,2 | - | - | 0,15 | 0,07 | 50,8 | 32,1 | brun. | 89,0 |
| 10:1:89 | 30 | 0,04 | 0,06 | <0,01 | 0,01 | 0,01 | <0,1 | 0,06 | 52,1 | 30,1 | blanc | 99 |
| 5:1:94 | 32,1 | 0,04 | 0,04 | <0,01 | - | - | <0,1 | - | - | - | blanc | 99,2 |
| 5:2:93 | 33,1 | 0,04 | 0,04 | <0,01 | - | - | <0;1 | - | 51,9 | 30,8 | blanc | 99,2 |
| 5:5:90 | 33,9 | 0,04 | 0,03 | <0,01 | - | - | <0,1 | - | 50,1 | 30,1 | jaune (pâle) | 99,2 |
| 10:10:80 | 32,1 | 0,01 | 0,01 | <0,01 | - | - | <0,1 | - | 53,1 | 31,6 | jaune | 99,4 |

*Pureté MgO % = $\dfrac{MgO\ \%}{(MgO + FeO + NiO + CaO + Al_2O_3 + Cu + SiO_2 + Cr_2O_3)\ \%}$ x 100

0075930

Régénération de la phase organique (stripping)

La régénération de la phase organique après l'étape de l'extraction liquide-liquide a été étudiée en utilisant soit l'acide sulfureux 1 N ou l'acide sulfurique 4 N avec un rapport phase organique/phase aqueuse O/A = 10. Trois contacts avec l'acide sulfureux et deux contacts avec l'acide sulfurique sont suffisants pour libérer la phase organique des métaux extraits durant l'extraction liquide-liquide. La phase organique régénérée a été utilisée à nouveau pour l'extraction liquide-liquide d'une autre charge de solution de lixiviation. Ces séries d'expériences ont été répétées 3 fois pour étudier l'efficacité de la phase organique régénérée. La solution de lixiviation après l'extraction liquide-liquide avec la phase organique nouvelle ou régénérée a été chauffée pour précipiter le sulfite de magnésium afin de déterminer la concentration des impuretés. Les résultats sont indiqués dans le tableau 3.

## Tableau 3

L'effet de la régénération de la phase organique sur la concentration des impurtés dans le sulfite de magnésium

| Type de phase organique | Analyse chimique du sulfite de magnésium (%) | | | | | | | |
|---|---|---|---|---|---|---|---|---|
| | MgO | NiO | $Fe_t$ | CaO | $Al_2O_3$ | $Cr_2O_3$ | $SiO_2$ | $MnO_2$ |
| Nouvelle | 34,7 | 0,03 | 0,04 | <0,01 | <0,02 | <0,04 | <0,1 | <0,01 |
| Régénérée pour la 1ere fois | 34,0 | 0,02 | 0,03 | <0,01 | <0,02 | <0,04 | <0,1 | <0,01 |
| Régénérée pour la 2e fois | 33,9 | 0,02 | 0,04 | <0,01 | <0,02 | <0,04 | <0,1 | <0,01 |
| Régénérée pour la 3e fois | 34,5 | 0,02 | 0,03 | <0,01 | <0,02 | <0,04 | <0,1 | <0,01 |

Le tableau 3 montre les résultats de l'influence de la régénération de la phase organique (stripping) sur la concentration des impuretés contenues dans le sulfite de magnésium. Il sindiquent clairement que l'efficacité de l'extraction par les solvants en question ne diminue pas jusqu'à la troisième régénération. On n'a trouvé aucune variation dans la concentration des impuretés contenues dans le sulfite de magnésium en utilisant soit la phase organique nouvelle soit celle régénérée.

9

REVENDICATIONS

1. Procédé de récupération du sulfite de magnésium et/ou du nickel à l'état pur contenus dans une matière de départ solide, caractérisé en ce qu'on traite celle-ci à l'aide de $SO_2$ gazeux dans l'eau, on soumet la solution obtenue à l'extraction liquide-liquide, à la suite de quoi on obtient une phase aqueuse et une phase organique, et l'on récupère le sulfite de magnésium et/ou du nickel de la phase aqueuse.

2. Procédé suivant la revendication 1, caractérisé en ce que l'extraction liquide-liquide s'effectue à l'aide d'une phase organique composée de Di(2EHPA), Kelex 100 et de kérosène.

3. Procédé suivant la revendication 2, caractérisé en ce que la proportion de Di(2EHPA), Kelex 100 et kérosène est 10:10:80 à 5:1:94 en volume.

4. Procédé suivant la revendication 3, caractérisé en ce que la proportion de Di(2EHPA), Kelex 100 et kérosène est 5:2:93.

5. Procédé suivant la revendication 3, caractérisé en ce que la proportion de Di(2EHPA), Kelex 100 et kérosène est 5:1:94.

6. Procédé suivant les revendications 4 Ou 5, caractérisé en ce que la phase aqueuse a un pH compris entre 2 et 4.

7. Procédé suivant les revendications 4 ou 5, caractérisé en ce que le pH est de 4.

8. Procédé suivant la revendication 7 caractérisé en ce que l'on effectue 3 étapes de contact entre la phase aqueuse et la phase organique pour enlever le fer, le calcium et le nickel de la phase aqueuse.

9. Procédé suivant la revendication 7, caractérisé en ce que l'on régénère la phase organique en la mettant en contact avec l'acide sulfureux.

10. Procédé suivant la revendication 7, caractérisé en ce que l'on régénère la phase organique en la mettant en contact avec de l'acide sulfurique 1 à 4 N.

11. Procédé suivant la revendication 8, caractérisé en ce que du sulfite de magnésium à 99,5% de pureté est récupéré de la phase aqueuse.

12. Procédé suivant la revendication 9, caractérisé en ce que l'on récupère le Ni de la phase aqueuse provenant d'une réextraction de la phase organique.

13. Procédé suivant la revendication 9, caractérisé en ce qu'on recycle la phase organique régénérée pour extraire de nouveau le fer, le calcium et le nickel.